# EUROPÄISCHE PATENTSCHRIFT

(11) **EP 1 840 522 B1**
(45) Veröffentlichungstag und Bekanntmachung des Hinweises auf die Patenterteilung: **23.10.2013**
(21) Anmeldenummer: 07005904.3
(22) Anmeldetag: 22.03.2007
(51) Int. Cl.: G01C 21/36, G06F 3/0481, G06F 3/01

(54) **Navigationsgerät und Verfahren zum Betreiben eines Navigationsgeräts**
Navigation device and method for operating a navigation device
Appareil de navigation et procédé destinés au fonctionnement d'un appareil de navigation

(30) Priorität: 27.03.2006 DE 102006014473; 02.08.2006 DE 102006037154
(43) Veröffentlichungstag der Anmeldung: 03.10.2007
(73) Patentinhaber: Volkswagen Aktiengesellschaft, 38440 Wolfsburg (DE)
(72) Erfinder: Bachfischer, Katharina, 38440 Wolfsburg (DE); Wäller, Christoph, 38102 Braunschweig (DE); Wagner, Volkmar, 10965 Berlin (DE); Dehmann, Rainer, 10963 Berlin (DE)
(74) Vertreter: Obst, Bernhard

(56) Entgegenhaltungen:
- WO-A-02/16875
- US-A- 5 731 979
- US-A1- 2004 189 720
- US-A1- 2006 026 521

## Beschreibung

Die Erfindung betrifft ein Navigationsgerät und ein Verfahren zum Betreiben eines Navigationsgeräts.

Navigationsgeräte werden heute bereits in vielen Fahrzeugen eingesetzt. Sie bieten einem Fahrzeugführer Hilfe bei der Orientierung und dem Auffinden einer gewünschten Fahrroute, um von einem Ausgangsort zu einem oder mehreren Zielorten zu gelangen. Hierbei geben Navigationsgeräte Hinweisinformationen aus. Diese werden in der Regel auf einer Anzeigevorrichtung dargestellt und/oder in Form von akustischen Signalen, beispielsweise gesprochenen Mitteilungen, ausgegeben. Auf der Anzeigevorrichtung wird hierzu meist eine Umgebungskarte des Fahrzeugs, des Startortes oder eines gewünschten Zielortes dargestellt.

Ein Zielort wird bei den modernen Navigationsgeräten zumeist über Multifunktionsbedienvorrichtungen eingegeben bzw. erfasst. Hierzu werden in der Regel mehrere Bedienoptionen oder Eingebemöglichkeiten auf der Anzeigevorrichtung dargestellt. Mittels eines oder mehrerer Bedienelemente wird eine der Eingabemöglichkeiten ausgewählt. Ist die Anzeigevorrichtung in eine Multifunktionsbedienvorrichtung integriert, die als Touchscreen-Einheit ausgebildet ist, so kann eine Auswahl über ein Berühren der Anzeigevorrichtung an der Stelle erfolgen, an der die Eingabemöglichkeit grafisch dargestellt ist. Andere Ausführungsformen sehen vor, dass eine der Eingabemöglichkeiten mit einem Fokus versehen ist, der beispielsweise über ein als Drehknopf ausgebildetes Bedienelement den unterschiedlichen Eingabemöglichkeiten zugeordnet werden kann. Über das Betätigen eines weiteren Bedienelements oder über eine Axialbewegung des Drehknopfes, wenn dieser als Dreh-Drückknopf ausgestaltet ist, kann dann die Eingebemöglichkeit ausgewählt werden, der der Fokus gerade zugewiesen ist. Diese Eingabe erfolgt zumeist Stufenweise in der Art, dass zunächst nur der Anfangsbuchstabe des Ortes ausgewählt wird, der eingegeben bzw. erfasst werden soll. Anschließend wird der zweite Buchstabe bzw. die Kombination aus dem ersten bereits ausgewählten Buchstaben und einem zweiten Buchstaben erfasst bzw. ausgewählt. Dieses Verfahren wird stufenweise fortgesetzt. Lassen sich die möglichen Eingabemöglichkeiten auf eine überschaubare Anzahl reduzieren, so wird eine abschließende Liste dargestellt, aus der eine Eingabemöglichkeit ausgewählt bzw. erfasst wird. Dieses Verfahren in seinen unterschiedlichen Ausgestaltungen hat sich als zuverlässig erwiesen, ist jedoch aufgrund seiner Mehrstufigkeit zeitaufwendig und nicht intuitiv. Zusätzlich werden zum Teil spezielle Kenntnisse vom Fahrzeugführer verlangt. Um beispielsweise den Flughafen einer Großstadt als Navigationsziel eingeben zu können, ist es bei manchen Ausführungsformen notwendig, die Ortsbezeichnung zu kennen, in dessen Grenzen sich der Flughafen befindet. Dieses sind bei Großstadtflughäfen häufig kleine unbekannte Ortschaften.

Alternativ bietet es sich an, die Eingabe über eine dargestellte Karte zu gestalten, in der ein Fadenkreuz oder ein so genannter Cursor bewegt werden. Auch dieser Prozess muss in der Regel mehrstufig ausgeführt werden, um eine notwendige Auflösung bei einer Zielpunkteingabe zu erreichen. Zunächst wird eine Übersichtskarte angezeigt. Der Cursor wird in ein Zielgebiet oder zu einer vorläufigen Zielposition bewegt. Dieses kann beispielsweise mittels als Pfeiltasten ausgebildeten Bedienelementen erfolgen. Im Anschluss an eine Eingabe, über die die vorläufige Zielposition ausgewählt wird, wird eine Umgebung um die Zielposition vergrößert dargestellt. Hierdurch wird der dargestellte Kartenausschnitt kleiner und zugleich dessen Positionsauflösung erhöht. Ist die Positionsauflösung ausreichend, kann der Zielort abschließend erfasst werden. Die Ausschnittsvergrößerung erfolgt hierbei stufenweise in vorfestgelegten Vergrößerungsstufen. Diese Art der Zielpunkteingabe/-erfassung ist besonders geeignet für dem Navigationsgerät bereits bekannte Zielpunkte, Sehenswürdigkeiten und Funktionseinrichtungen wie Flughäfen usw., die in einer Kartendarstellung mittels eines grafischen Symbols oder einer charakteristischen Abbildung angezeigt werden können.

Moderne Navigationsgeräte bieten jedoch vielfältige zusätzliche Dienste an. So kann man über das Navigationsgerät beispielsweise Hotels, Restaurants, Kinos, Sehenswürdigkeiten, Tankstellen, Ortschaften usw. (die auch als Punkte von Interesse - engl. Point of Interest, POI - bezeichnet werden) in einer Umgebung von einer vorgegebenen Position suchen und anzeigen lassen. Über die einzelnen angezeigten POI kann man sich beispielsweise zusätzliche Informationen (Öffnungszeiten, ein Menu, ein Programm usw.) anzeigen oder ausgeben lassen. Für diese Zwecke ist es häufig wünschenswert, sich eine Umgebung des Fahrzeugs als Karte grafisch darstellen zu lassen und sich anschließend die einzelnen POl anzeigen und gegebenenfalls die zusätzlichen Informationen ausgeben zulassen. Hierbei werden die POI in einem vorfestgelegten Umkreis angezeigt. Das Fahrzeug ist mittig in der Kartendarstellung angeordnet. Eine Orientierung ist auf diesen Kartenausschnitten häufig schwierig, da sich der Ausschnitt an vorfestgelegten Vergrößerungsstufen der Navigationskarte orientiert. Um sich jedoch die Umgebung, beispielsweise in einer Stadt, einprägen zu können, so dass ein Zielort, beispielsweise ein Restaurant in einer Fußgängerzone, ohne das Navigationsgerät aufgefunden werden kann, ist es wünschenswert, einen Ausschnitt so wählen zu können, dass markante Punkte auf dem dargestellten Katenausschnitt sichtbar sind. Hierzu kann es erforderlich sein, die Darstellung der Karte so zu verändern, dass ein größerer Bereich dargestellt wird (herauszoomen), oder auch den Kartenausschnitt so zu verschieben, dass sich der Fahrzeugstandort nicht mehr mittig in dem Kartenausschnitt befindet.

Aus der US 5,731,979 ist eine Informationsanzeigevorrichtung mit einem Touchscreen bekannt, auf dem Kartenausschnitte darstellbar sind. Die Vorrichtung ist so ausgestaltet, dass bei einer Berührung eines vorgegebenen Bereichs zwischen unterschiedlichen Anzeigezuständen umgeschaltet werden kann. In einem Zustand werden ein Kartenausschnitt und ein Fenster mit einem vergrößerten Kartenausschnitt dargestellt. In einem anderen Zustand wird nur ein Kartenausschnitt dargestellt.

In der WO 02/16875 A1 ist ein Verfahren zum Abfragen einer Zielinformationen beschrieben, bei dem ein dreidimensionales Objekt in einer Kartenansicht ausgewählt werden kann. Damit ein Nutzer sich virtuell in der Kartenansicht bewegen kann, werden Gesten des Benutzers ausgewertet.

Die US 2006/0026521 A1 beschreibt ein Verfahren und ein System zum Verarbeiten von Berührungseingaben, die insbesonder mit einem mehrpunkt-berührungssensitiven Bedienelement, beispielsweise einem Touchscreen, der mehrere Berührungen zeitgleich erfassen kann, detektiert werden.

Wie oben aufgezeigt ist, lässt sich die Bedienung von Navigationsgeräten weiter verbessern.

Der Erfindung liegt somit das Problem zugrunde, ein Navigationsgerät und ein Verfahren zum Betreiben von Navigationsgeräten zu schaffen, die eine einfachere und intuitivere Bedienung des Navigationsgerätes, insbesondere ein Auswählen von Kartenausschnitten und Zielpositionen bzw. Punkten von Interesse, ermöglichen.

Die Erfindung wird durch ein Navigationsgerät mit den Merkmalen des Patentanspruchs 1 sowie ein Verfahren zum Betreiben eines Navigationsgeräts mit den Merkmalen des Patentanspruchs 12 gelöst. Vorteilhafte Ausgestaltungen der Erfindung ergeben sich aus den abhängigen Ansprüchen.

Zur Lösung der technischen Aufgabe wird ein Navigationsgerät mit einer Anzeigevorrichtung und mindestens einer Sensoreinheit zum Ermitteln einer Position eines Körperteils, insbesondere eines Fingers, eines Nutzers zumindest relativ zu einer Anzeigefläche der Anzeigevorrichtung vorgeschlagen, wobei eine Darstellung von Navigationsinformationen, insbesondere von Kartenausschnitten, in Abhängigkeit von der ermittelten Position des Körperteils angepasst auf der Anzeigefläche erfolgt. Hierdurch wird eine intuitive und einfache Bedienung des Navigationsgeräts ermöglicht.

Eine große Vielfalt an Anpassungsmöglichkeiten kann auf einfache Weise mit dem Körperteil gesteuert und bedient werden, indem ein Volumen vor der Anzeigefläche in Teilvolumina unterteilt ist, und die Sensoreinheit ausgestaltet ist, dass ein Bestimmen der Position ein Ermitteln eines der Teilvolumina, in dem sich das Körperteil befindet, umfasst und eine Anpassung der Darstellung der Navigationsinformationen in Abhängigkeit von dem ermittelten Teilvolumen erfolgt, in dem sich das Körperteil befindet. Dies bedeutet, dass den Teilvolumina unterschiedliche Anpassungsfunktionen zugeordnet sein können. Beispielsweise kann das Volumen vor der Anzeigefläche in Schichten unterteilt sein, die parallel zu der Anzeigefläche verlaufen. Einer Schicht kann beispielsweise das Hineinzoomen, einer anderen Schicht das Herauszoomen usw. zugeordnet sein. Eine weitere Schicht kann in vier Sektoren unterteilt sein, wobei jedem Sektor eine Ausschnittsverschiebung in einer Richtung zugeordnet ist. Die Aufteilung kann auch in mehr oder weniger Sektoren als vier Sektoren erfolgen. Ferner kann die Anpassung zusätzlich von der genauen Position des Körperteils innerhalb des Teilvolumens abhängig sein. In der beschriebenen beispielhaften Ausführungsform kann jedem der vier Sektoren die Ausschnittsverschiebung in einer vorfestgelegten Richtung zugeordnet sein. Mit welcher "Geschwindigkeit" die Ausschnittsverschiebung oder mit wie großen Verschiebungsschritten die Ausschnittsverschiebung stattfindet, kann von der genauen Position des Körperteils, beispielsweise Fingers, innerhalb des Sektors abhängig sein. Als Volumen vor der Anzeigefläche wird der Teilraum vor der Ebene angesehen, in der sich die Anzeigefläche befindet. Dies bedeutet, dass das Volumen in einer Ausdehnungsrichtung parallel zu der Anzeigefläche eine wesentlich größere Ausdehnung als die Anzeigefläche selbst aufweisen kann. Die Größe des Volumens ist in praktischer Hinsicht durch eine Sensorreichweite festgelegt, innerhalb derer die mindestens eine Sensoreinheit die Position des Körperteils zumindest teilweise, d.h. mindestens eine Position im Raum bestimmende Angabe, ermitteln kann.

Zur Schaffung einer Möglichkeit insbesondere eine Anpassung bei einer Änderung der Position des Körperteils zu unterbinden, um das Körperteil entfernen zu können und um die aktuelle Darstellung der Navigationsinformationen beizubehalten und/oder ein ortsabhängiges Betätigungselement betätigen zu können, ohne die Darstellung während der Betätigungshandlung zu verändern, ist gemäß der Erfindung vorgesehen, dass die Sensoreinheit ausgestaltet ist, mindestens eine Geste, beispielsweise anhand einer flächigen Ausdehnung (statische Geste) oder einer ausgeführten Bewegung (dynamische Geste), zu erkennen und eine Anpassung der Darstellung zeitlich nach dem Erkennen der mindestens einen Geste in Abhängigkeit von der Position und/oder der ermittelten mindestens einen weiteren Position und/oder der ermittelten Geschwindigkeit und/oder des ermittelten Teilvolumens in veränderter Weise erfolgt, insbesondere in der Weise, dass keine Anpassung erfolgt.

Ein Navigationsgerät umfasst vorteilhafterweise eine Anpassungseinheit, mittels der die Anpassung der Darstellung erfolgt. Die Anpassungseinheit kann in eine Zentralrechnereinheit des Navigationsgeräts integriert sein. In der Regel umfasst sie einen in Software ausgeführten Bestandteil, mit dessen Hilfe die von der Sensoreinheit ermittelte Position verarbeitet wird, um die Darstellung der Navigationsinformationen, insbesondere von Karteninformationen, entsprechend anzupassen.

Bei einer bevorzugten Ausführungsform eines Navigationsgeräts ist vorgesehen, dass die Sensoreinheit so ausgestaltet ist, dass das Ermitteln der Position zumindest das Ermitteln eines Abstand des Körperteils von der Anzeigefläche umfasst und die Darstellung der Navigationsinformationen hinsichtlich einer Ausschnittsvergrößerung der Navigationsinformationen, insbesondere einer Ausschnittsgröße des Kartenausschnitts, abhängig von dem ermittelten Abstand angepasst wird. Hierdurch wird es möglich, beispielsweise gekoppelt mit einer Bewegung des Körperteils auf die Anzeigefläche zu, in eine Karte hinein (oder hinaus) zu zoom und bei einer Bewegung weg von der Anzeigefläche entsprechend aus der Karte heraus (oder hinein) zu zoomen.

Um auch auf eine einfache Weise eine Verschiebung eines Ausschnitts der dargestellten Navigationsinformationen zu ermöglichen, beispielsweise das "Verschieben" des dargestellten Ausschnitts in einer zugrunde liegenden Gesamtkarte, sieht eine Ausführungsform der Erfindung vor, dass die Sensoreinheit ausgestaltet ist, dass das Ermitteln der Position zumindest das Ermitteln eines seitlichen Abstands des Körperteils von einer auf der Anzeigefläche stehenden Zentralachse umfasst und die Darstellung der Navigationsinformationen hinsichtlich einer Ausschnittsauswahl der Navigationsinformationen, insbesondere einer Ausschnittsbereichsauswahl des Kartenausschnitts, abhängig von dem ermittelten seitlichen Abstand angepasst wird. Als Zentralachse im Sinne der Anmeldung wird eine virtuelle Achse angesehen, die sich von der Anzeigefläche in ein Volumen vor der Anzeigefläche erstreckt. Bevorzugt wird der Aufpunkt der Zentralachse in der Abbildungsfläche in einer Mitte der Anzeigefläche liegen. Dieses ist jedoch nicht zwingend erforderlich. Ein minimaler Neigungswinkel der Zentralachse, gemessen gegen eine Tangentialfläche der Anzeigefläche im Aufpunkt, wird je nach Anordnung der Anzeigefläche relativ zu der Position eines Nutzers festgelegt. In einer Ausführungsform beträgt dieser Winkel 90°. In einem Kraftfahrzeug, bei dem die Anzeigefläche des Navigationsgeräts in einer Mittelkonsole angebracht ist, kann jedoch auch ein Winkel kleiner 90° von Vorteil sein. Die Zentralachse wird dann vorzugsweise so angeordnet, dass sie vom Aufpunkt in Richtung eines Nutzers, in der Regel des Fahrers, weist, der das Navigationsgerät bedienen will. Bei besonders bevorzugten Ausführungsformen ist die Zentralachse entlang einer bevorzugten Bewegungsrichtung ausgerichtet, in der der Nutzer seinen Finger zu einem Mittelpunkt auf der Anzeigefläche bewegt, wenn er diesen berühren will. Indem der Abstand von dieser Zentralachse ausgewertet wird, ist es auf einfache Weise möglich, eine Verschiebung des Kartenausschnitts zu erhalten. Vorzugsweise gibt es einen Schwellenabstand, der überschritten sein muss, damit eine Änderung der Ausschnittsauswahl bewirkt wird.

Die Anpassung der Darstellung in Abhängigkeit von dem Abstand und/oder dem seitlichen Abstand kann kontinuierlich und/oder stufenweise erfolgen.

Um eine Betätigung eines ortsabhängigen, vorzugsweise berührungsempfindlichen Betätigungselements, beispielsweise bei einer als Touchscreen ausgebildeten Anzeigevorrichtung, an jeder Stelle auf der Anzeigefläche ausführen zu können, ohne unmittelbar vor der Betätigung eine Anpassung der Darstellung der Navigationsinformationen auszulösen, ist bei einer bevorzugten Ausführungsform der Erfindung vorgesehen, dass zumindest ein Teilvolumen ausgezeichnet ist, innerhalb dessen eine Bewegung des Körperteils möglich ist, ohne eine Anpassung der Darstellung der Navigationsinformationen zu bewirken. Dieses Teilvolumen ist vorzugsweise direkt benachbart zu dem Betätigungselement angeordnet.

Um einen unbeabsichtigten Wechsel zwischen den Anpassungsfunktionen, die benachbarten Teilvolumina zugewiesen sind, zu vermeiden, ist vorteilhafterweise vorgesehen, dass die Teilvolumina einander teilweise überlappen. Hierdurch ist es möglich, einen Wechsel der Anpassungsfunktion hystereseartig auszugestalten. Das heißt, dass das Körperteil erst als in einem benachbarten Teilvolumen befindlich betrachtet wird, wenn es sich nicht zugleich noch in dem Teilvolumen befindet, in dem es sich zuvor befand. Dies bedeutet, erst wenn das Körperteil den Überlappungsbereich verlassen hat, wird es als in dem anderen Teilvolumen befindlich angesehen.

Bei einer Ausführungsform der Erfindung ist vorgesehen, dass die Sensoreinheit ausgestaltet ist, mindestens eine weitere Position zeitlich vorausgehend zu ermitteln, und die Anpassung in der Darstellung in Abhängigkeit von der mindestens einen weiteren Position und der Position erfolgt. Hierdurch wird es möglich, dass bestimmten Teilvolumina eine Anpassungsfunktion nur zugewiesen ist, wenn zuvor eine andere Anpassungsfunktion ausgelöst wurde, d. h. sich das Körperteil an der weiteren Position befand.

Ein Auslösen der Anpassung kann zeitabhängig erfolgen. Dieses bedeutet, dass eine Anpassung in Abhängigkeit von der Position und einer Verweildauer an der Position bzw. in einer Umgebung hiervon erfolgt. Ebenso kann eine Betätigung einer Funktion, die mit dargestellten Navigationsinformationen verknüpft ist, in Abhängigkeit von der Verweildauer und somit berührungslos erfolgen. Ein von der Navigationsinformation umfasstes Bedienelement kann somit berührungslos betätigt werden. Beispielsweise kann ein Zielort auch eingegeben werden, indem das Körperteil eine vorgegebene Zeitdauer in einer Position oder einem Bereich um die Position gehalten wird, die räumlich benachbart zu der Darstellung des Zielortes auf der Anzeigefläche ist. Als Zielort wird dann der Ort erfasst, der unter dem Körperteil als Navigationsinformation dargestellt ist. "Unter" bedeutet in diesem Zusammenhang, das eine Projektion der Position auf die Anzeigefläche erfolgt. Diese erfolgt entlang einer festgelegten Richtung, die nicht senkrecht zur Anzeigefläche ausgerichtet sein muss und von der Position selbst abhängig sein kann. Vorzugsweise ist die Projektionsrichtung durch eine Blickrichtung des Nutzers auf die Anzeigefläche festgelegt, die durch die Position verläuft, an der sich das Körperteil befindet. Um den Ort der Projektion in den Navigationsinformationen zu kennzeichnen, kann diesen Navigationsinformationen bei der Darstellung eine Markierung, beispielsweise ein Punkt oder ein Fadenkreuz, überlagert werden.

Eine bevorzugte Ausführungsform der Erfindung umfasst eine Geschwindigkeitsermittlungseinheit zum Ermitteln einer Geschwindigkeit des Körperteils, wobei eine Anpassung der Darstellung der Navigationsinformationen zusätzlich in Abhängigkeit der ermittelten Geschwindigkeit erfolgt. So kann die Geschwindigkeit, mit der das Körperteil in die Position bewegt wird, zusätzlich zu der Position die Anpassung beeinflussen. Wird das Körperteil beispielsweise mit einer Geschwindigkeit oberhalb einer ersten Schwellengeschwindigkeit auf die Anzeigefläche zu bewegt oder von dieser wegbewegt, so kann beispielsweise eine Anpassung der Darstellung unterbleiben. Wohingegen bei einer Bewegung des Körperteils mit einer Geschwindigkeit unterhalb der ersten Schwellengeschwindigkeit in die Position eine Anpassung an der Darstellung erfolgt, die beispielsweise einer Ausschnittsvergrößerung entspricht, die dem entsprechenden Abstand, der mit der Position korrespondiert, zugeordnet ist.

Da Nutzer in einem Kraftfahrzeug unterschiedliche Körpergrößen aufweisen und unterschiedliche Sitzpositionen bevorzugen, ist eine Anpassung einzelner oder mehrerer Parameter, wie eine Festlegung der Zentralachse, eine Festlegung der ersten Schwellengeschwindigkeit, von Größen und Anordnungen der Teilvolumina, einer Festlegung der Projektionsrichtung des Körperteils auf die Anzeigefläche usw., wünschenswert. Daher umfasst eine bevorzugte Ausführungsform ein Kalibrierungsmodul, dass eine Kalibrierungsroutine ausführt, bei der der Nutzer vorgegebene Bewegungen auf Anweisung des Navigationssystems ausführt, um eine benutzerspezifische Anpassung vorzunehmen. Die hierbei gewonnen Daten und/oder hieraus abgeleiteten Konfigurationsdaten können in einer Speichereinrichtung abgelegt werden. Diese können mit einer Benutzerkennung verknüpft sein oder werden, die beispielsweise mit einem Fahrzeugschlüssel korreliert ist oder über eine Bedienhandlung mittels des Navigationsgeräts mit einer Standardkonfiguration von diesem selbst erfasst wird. Beispielsweise ist vorgesehen, dass bei einer Inbetriebnahme als Navigationsinformationen eine Liste der bekannten Nutzer angezeigt wird und in Abhängigkeit von der ermittelten Position des Körperteils des Nutzers, in die er das Körperteil bewegt hat, seine entsprechende Benutzerkennung ausgewählt wird.

Die Merkmale des erfindungsgemäßen Verfahrens weisen dieselben Vorteile wie die entsprechenden Merkmale der erfindungsgemäßen Vorrichtung auf.

Die Erfindung wird nachfolgend anhand von Figuren näher erläutert. Diese zeigen:
- Fig. 1: eine schematische Ansicht einer Anzeigevorrichtung, auf der ein Kartenausschnitt in einer Übersichtsdarstellung angezeigt ist;
- Fig. 2: eine schematische Ansicht der Anzeigevorrichtung nach Fig.1, auf der ein Kartenausschnitt in einer vergrößerten Darstellung angezeigt ist;
- Fig. 3: eine schematische Ansicht der Anzeigevorrichtung nach Fig.1, auf der ein anderer Kartenausschnitt in einer vergrößerten Darstellung angezeigt ist;
- Fig. 4: eine schematische Darstellung einer Anzeigevorrichtung und von in einem Bereich vor der Anzeigevorrichtung festgelegten Zonen;
- Fig. 5: eine schematische Ansicht einer Anzeigevorrichtung, auf der ein Kartenausschnitt dargestellt ist, in dem ein Bedienelement aktiviert ist;
- Fig. 6: eine schematische Ansicht der Anzeigevorrichtung, auf der die mit einem Punkt von Interesse verknüpften Informationen vergrößert dargestellt sind;
- Fig. 7: eine schematische Ansicht der Anzeigevorrichtung, auf der ein Punkt von Interesse vergrößerten dargestellt ist; und
- Fig. 8: eine schematische Darstellung eines Navigationsgeräts, das in eine Multifunktionsbedienvorrichtung integriert ist.

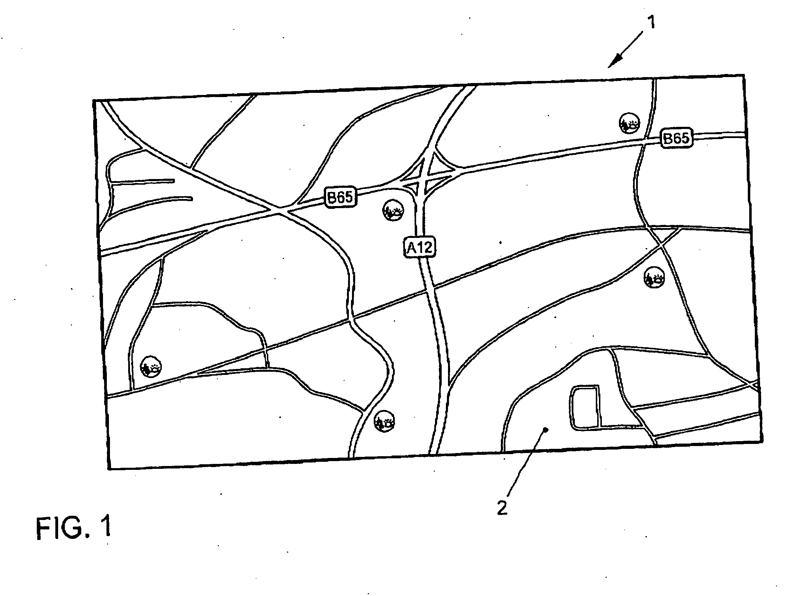

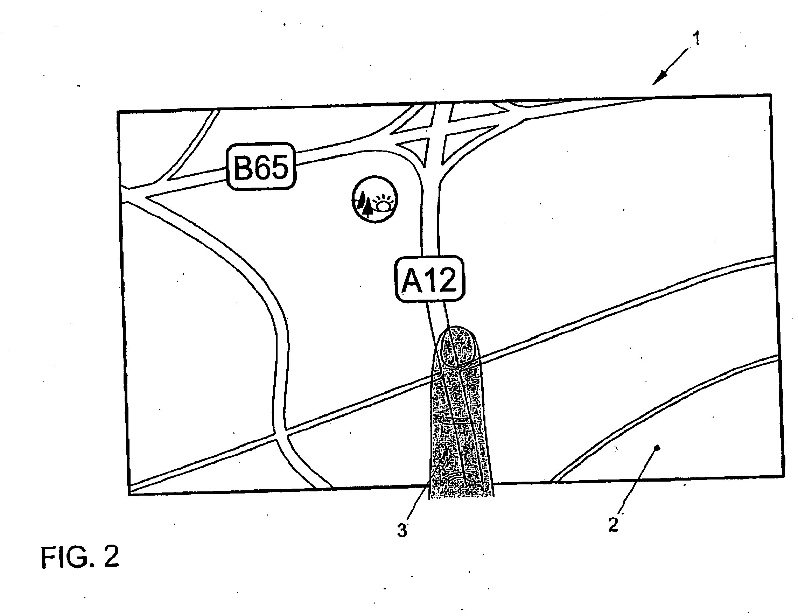

In Fig. 1 ist eine schematische Darstellung einer Anzeigevorrichtung 1 eines Navigationsgeräts gezeigt. Dargestellt ist ein Kartenausschnitt 2 in einer Übersichtsdarstellung. Um einen vergrößert dargestellten Kartenausschnitt zu erhalten, bewegt ein Nutzer seinen Finger 3 (vgl. Fig. 2) auf die Anzeigevorrichtung zu. Mittels eines oder mehrerer Sensoreinheiten wird eine Position des Fingers 3 erfasst. In Abhängigkeit von der Position des Fingers 3 wird der Vergrößerungsmaßstab des dargestellten Kartenausschnitts 2 festgelegt und der Kartenausschnitt 2 entsprechend vergrößert angezeigt, wie in Fig. 2 dargestellt ist.

Das Navigationsgerät ist in einer Ausführungsform vorzugsweise so ausgestaltet, dass die Ausschnittsvergrößerung proportional zu dem Abstand des Fingers von der Oberfläche der Anzeigevorrichtung ist. Dies bedeutet, dass ein großer Bereich in einem kleinen Maßstab auf der Anzeigevorrichtung angezeigt wird, wenn der Finger sich in einem großen Abstand befindet und ein kleiner Bereich vergrößert (hineingezoomt) dargestellt wird, wenn sich der Finger in einem kleinen Abstand vor der Anzeigevorrichtung befindet.

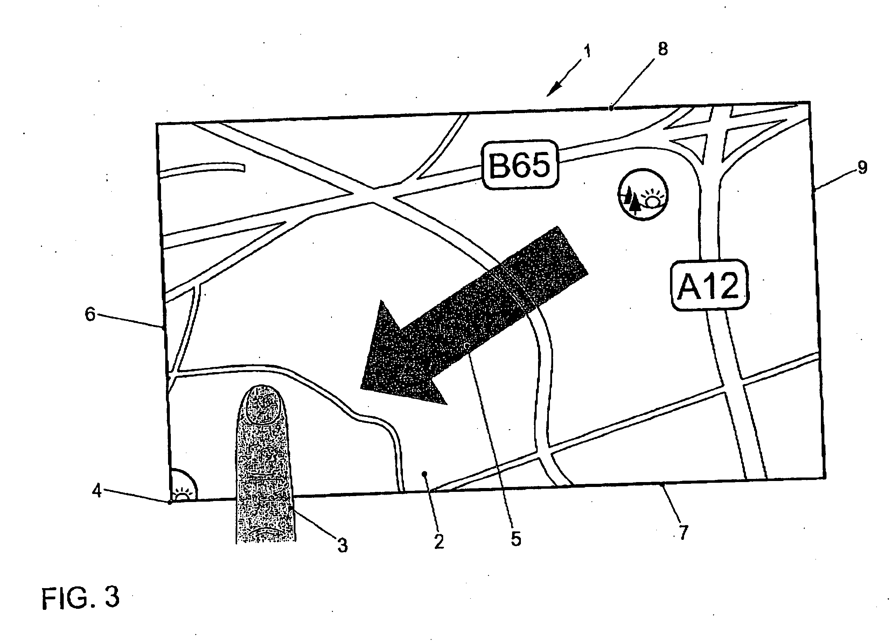

Um den dargestellten Bereich bei gleich bleibender Vergrößerung, d. h. in der Kartenebene verändern zu können, ist vorteilhafterweise vorgesehen, dass der Bereich verschoben wird, wenn der Finger von einer Zentralachse entfernt wird. Die Zentralachse fällt vorzugsweise mit einer Blickachse von dem Nutzer auf eine Mitte der Anzeigevorrichtung zusammen. Dieses bedeutet, dass der Finger aus Sicht des Nutzers an den Rand oder sogar über diesen hinaus bewegt wird, um den Kartenausschnitt "zu verschieben". Dieses ist in Fig. 3 angedeutet. Der Finger 3 ist in eine untere linke Ecke 4 der Anzeigevorrichtung bewegt. Der dargestellte Kartenausschnitt wird entsprechend angepasst. D. h., in der Übersichtsdarstellung bewegt sich der Kartenausschnitt ebenfalls nach links unten relativ zu dem in Fig. 2 dargestellten Kartenausschnitt. Dieses ist mittels eines Pfeils 5 schematisch angedeutet. An einem linken Rand 6 und einem unteren Rand 7 erscheinen "neue" Karteninformationen, während an einem oberen Rand 8 und einem rechten Rand 9 Karteninformationen "verschwinden".

Die Verschiebung in der Kartenebene und das Wählen der Vergrößerung kann zeitgleich erfolgen, so dass das Zoomen und Verschieben in Abhängigkeit von der räumlichen Position des Fingers erfolgt.

Befindet sich der Finger auf einer Zentralachse oder in einem Volumenbereich um die Zentralachse, so findet keine Verschiebung des Kartenausschnitts statt. Dieses Volumen kann zylinderförmig gewählt werden oder ein Volumen sein, das sich aus einer Projektion einer Anzeigefläche der Anzeigevorrichtung entlang der Zentralachse ergibt. Andere Formen können für das Volumen gewählt werden. Die Zentralachse steht in einer Ausführungsform senkrecht auf einem Mittelpunkt einer Anzeigefläche der Anzeigevorrichtung. Die Wahl einer Zentralachse, die von dieser Orientierung abweicht, bietet die Möglichkeit, die Bedienung angepasst an eine Blickrichtung des Fahrzeugführers auszuführen. Die Zentralachse wird beispielsweise deckungsgleich zu einer Blickrichtung des Fahrzeuglenkers auf die Mitte des Anzeigefelds der Anzeigevorrichtung gewählt. Alternativ kann eine Festlegung der Zentralachse mittels eines Kalibrierungsverfahrens erfolgen, in dem der Nutzer aufgefordert wird, das zur Betätigung verwendete Körperteil zur Mitte der Anzeigefläche zu führen. Die Kurve, der das Körperteil folgt, kann erfasst und als Zentralachse verwendet werden. Dieses bedeutet, dass die Zentralachse nicht zwangsläufig durch eine Gerade approximierbar sein muss, sondern auch eine gekrümmte stetige Kurve sein kann.

Der oder die Sensoren sind vorzugsweise so ausgestaltet, dass eine räumliche Ausdehnung des Körperteils erfasst werden kann. Hierdurch wird die Möglichkeit geschaffen, Gesten interpretieren zu können. Um den Finger bzw. die Hand, an der der Finger angewachsen ist, nach einer Bedienaktion entfernen zu können, ohne hierdurch eine Verschiebung des Kartenausschnitts oder eine Veränderung der Größendarstellung (des Zooms) zu bewirken, ist vorgesehen, dass eine Geste mit der Hand ausgeführt wird, die als Bedienstoppsignal erkannt wird. Werden beispielsweise die übrigen Finger der Hand ausgeklappt, so dass sich eine flache Hand ergibt, deren Fläche im Wesentlichen senkrecht zur Zentralachse ausgerichtet ist, wird dieses als Bedienstoppsignal erkannt. Die Hand kann jetzt vor der Anzeigevorrichtung des Navigationsgeräts entfernt werden, ohne dass dieses einen Einfluss auf die Darstellung hat.

Das Zoomen und Verschieben des Kartenausschnitts kann auch auf andere Weise vorteilhaft erreicht werden. Hierzu wird der Raum oder das Volumen vor und gegebenenfalls auch neben der Anzeigevorrichtung in Teilvolumina, die auch als dreidimensionale Abschnitte, Schichten oder Gebiete oder Sektoren, vorzugsweise quaderförmige oder Zylinder-/ oder Kegelsektorabschnitte, unterteilt. Den Teilvolumina werden Aktionen zugewiesen. Befindet sich eine Fingerspitze in einem Teilvolumen oder Abschnitt, so wird die entsprechende Aktion ausgeführt. Die Teilvolumina oder Abschnitte können sich im Raum überlappen, um eine hystereseartige Bedienung zu erreichen. Dieses bewirkt, dass eine Fingerspitze, die aus einem Abschnitt in einen anderen Abschnitt bewegt ist, erst deutlich wieder aus diesem anderen Abschnitt heraus in den einen Abschnitt bewegt werden muss, um wieder als in dem einen Abschnitt befindlich betrachtet zu werden. Ein kontinuierlicher ungewollter Wechsel zwischen zwei Aktionen wird hierdurch vermieden.

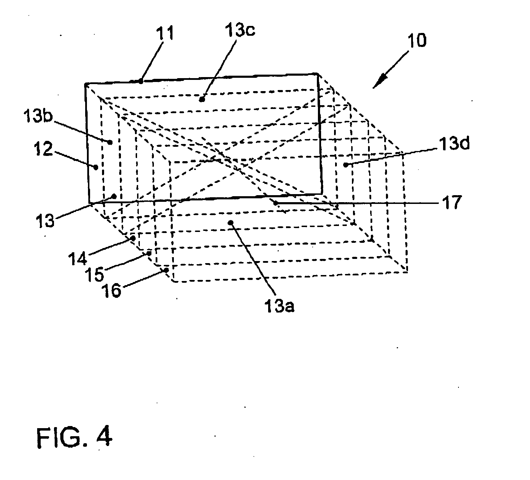

Eine einfache Ausführungsform nach Fig. 4 sieht vor, dass der Raumbereich 10 vor der Anzeigevorrichtung 11 beispielsweise in fünf Teilvolumina oder Zonen 12-16 unterteilt ist, die parallel vor dem Anzeigefeld der Anzeigevorrichtung angeordnet sind. Der innersten Zone 12 (angrenzend an das Anzeigefeld) ist keine Aktion zugeordnet bzw. die Funktion "lasse Darstellung unverändert". Der nächsten Zone 13 ist eine Funktion Verschieben des Kartenausschnitts zugeordnet. Hierfür ist die Zone in mehr mehrere Sektoren 13a ,13b, 13c, 13d unterteilt, denen die Unteraktionen verschieben nach unten 13a, links 13b, oben 13c, rechts 13d zugeordnet sind. Einer darüber liegenden Zone 14 ist die Aktion Vergrößern der Darstellung (Zoom in) zugeordnet und einer vierten Zone 15 ist erneut die Aktion "lasse Darstellung unverändert" zugeordnet. Einer fünften und äußersten Zone 16 ist die Aktion Verkleinern der Darstellung (Zoom out) zugeordnet.

Befindet sich der Finger in einer der Zonen 12-16, so wird die zughörige Aktion ausgeführt. Das Zoomen findet beispielsweise so lange statt, wie sich der Finger in den entsprechenden Zonen 14 oder 16 befindet. Es ist vorgesehen, dass die den Zonen 12-16 zugeordnete Aktion erst bei einer gewissen vorgegebenen Verweildauer des Fingers in der Zone 12-16 ausgeführt wird. Zusätzlich kann vorgesehen sein, dass die zugeordnete Funktion/Aktion einer Zone 12-16 davon abhängig ist, aus welcher Zone 12-16 der Finger in die jeweilige Zone 12-16 bewegt wird oder mit welcher Geschwindigkeit er sich in die Zone bewegt. So kann vorgesehen sein, dass, wenn der Finger von außerhalb der Zonen 12-16 (aus großer Entfernung) in die äußerste Zone 16 bewegt wird, ein Verkleinern (zoom out) der Darstellung nicht erfolgt. Dieses erfolgt nur, wenn zuvor ein Vergrößern der Darstellung in demselben Bedienzusammenhang stattgefunden hat.

Am bevorzugtesten ist eine Kombination, die sowohl die Eintrittsrichtung als auch eine Verweildauer und/oder eine Eintrittsgeschwindigkeit berücksichtigt. So kann erreicht werden, dass nach dem Vergrößern der Darstellung diese erhalten bleibt, wenn der Finger schnell durch die äußerste Zone 16 bewegt wird, ohne ein Herauszoomen zu bewirken. Alternativ oder zusätzlich kann auch bei dieser Ausführungsform eine Interpretation von Gesten durchgeführt werden.

Der innersten Zone 12 ist keine Aktion (oder die Aktion "lasse die Darstellung unverändert") zugewiesen, um zu ermöglichen, dass bei einer als Touchscreen ausgebildeten Anzeigevorrichtung 11 eine Bedienhandlung durchgeführt werden kann, ohne dass sich die Darstellung des Kartenausschnitts verändert. Hierdurch ist es möglich, jeden Punkt auf dem dargestellten Kartenausschnitt anzuwählen.

Eine Zentralachse 17 steht bei dieser Ausführungsform senkrecht auf einer Oberfläche der Anzeigevorrichtung.

Die Aufteilung des Volumens in Teilvolumina, in Bereiche und Zonen und Sektoren, kann den jeweiligen Erfordernissen angepasst werden. Es können mehr oder weniger als fünf Zonen verwendet werden. Die Zonen können in beliebig viele Unterzonen oder Sektoren unterteilt sein. Innerhalb einer Zone kann die Position auch zur variablen Veränderung herangezogen werden. D. h. in einer Zone bzw. einem Abschnitt kann die Position des Fingers innerhalb der Zone die Zoomgeschwindigkeit (Vergrößerung pro Zeiteinheit) beeinflussen oder festlegen. Die Position innerhalb der Zone kann aber auch die Vergrößerungsstufe angeben.

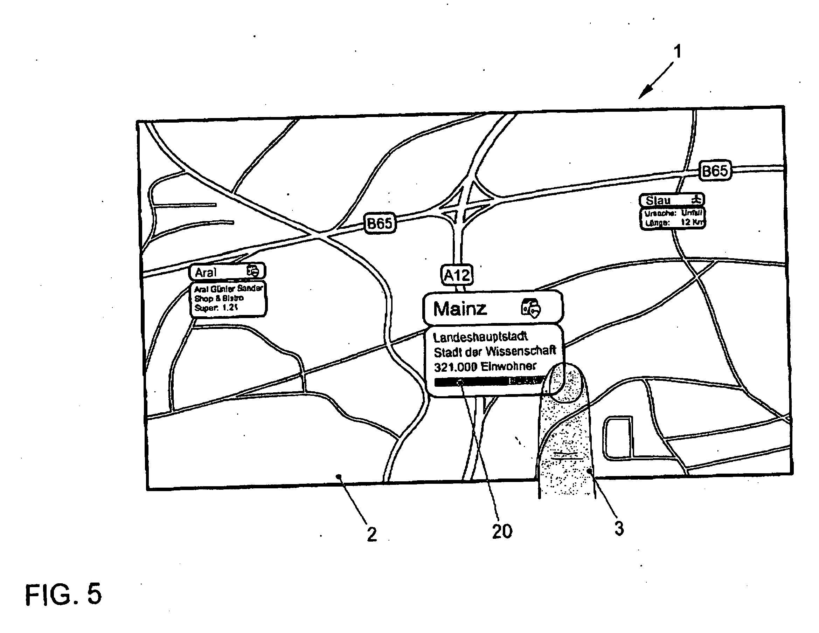

Eine Ausführungsform sieht vor, dass ein Auswählen von Bedienelementen, die in die Kartendarstellung integriert sind, erfolgt, wenn der Finger eine vorgegebene Betätigungszeitspanne über dem Bedienelement verweilt. In Fig. 5 ist eine solche Situation dargestellt, in der eine Zusatzinformation mit einem Ort, hier der Stadt Mainz, in einer Kartendarstellung verknüpft ist. Diese Zusatzinformation ist eine akustische Information und bereits angewählt, wie mittels eines Verlaufsbalkens 20 angedeutet ist, der ein Abspielen der akustischen Information über die Stadt Mainz symbolisiert. Zweidrittel der akustischen Information sind bereits ausgegeben.

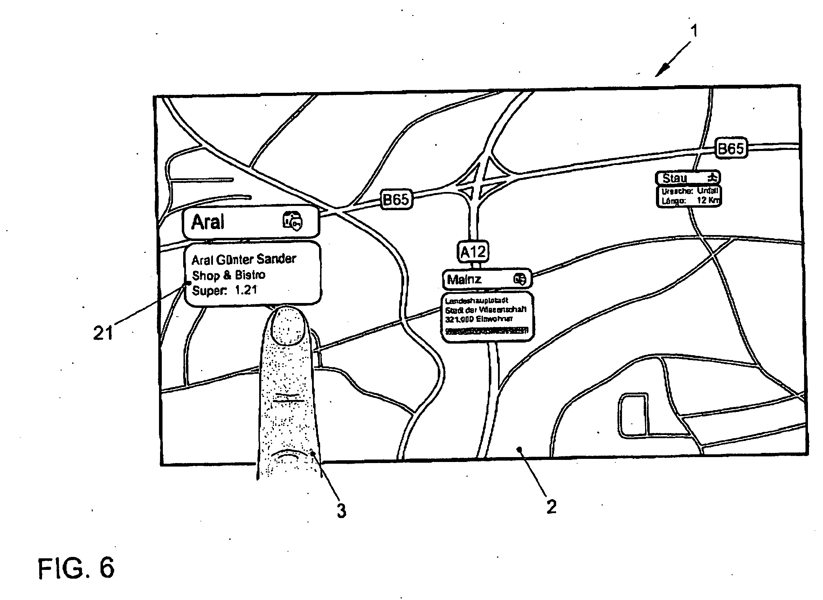

Wird der Finger über einen Punkt von Interesse bewegt, so werden vorzugsweise Informationen 21, die mit diesem verknüpft sind, vergrößert dargestellt. Dieses ist in Fig. 6 angedeutet.

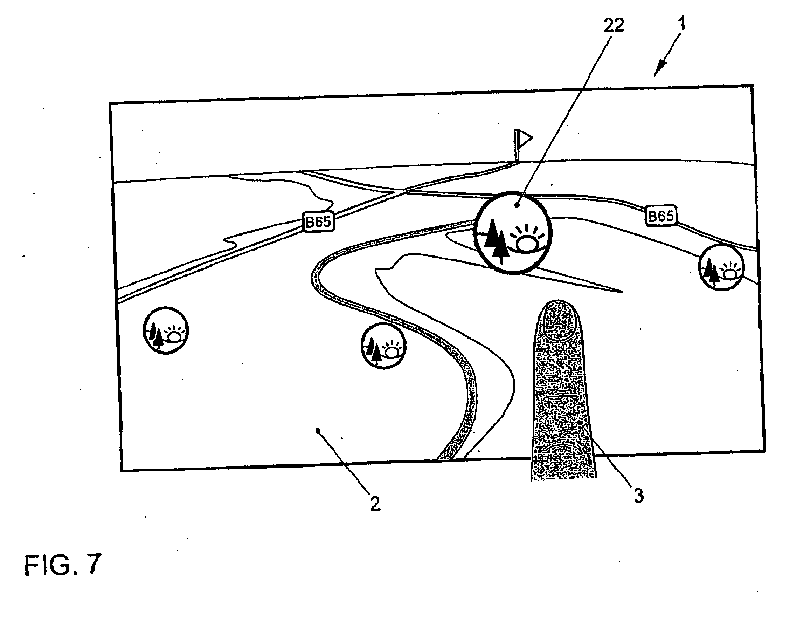

In Fig. 7 ist ein Punkt von Interesse 22 vergrößert dargestellt.

Es können Ausführungsformen gebildet werden, die einzelne der beschriebenen Merkmale oder unterschiedliche Kombinationen der Merkmale umfassen.

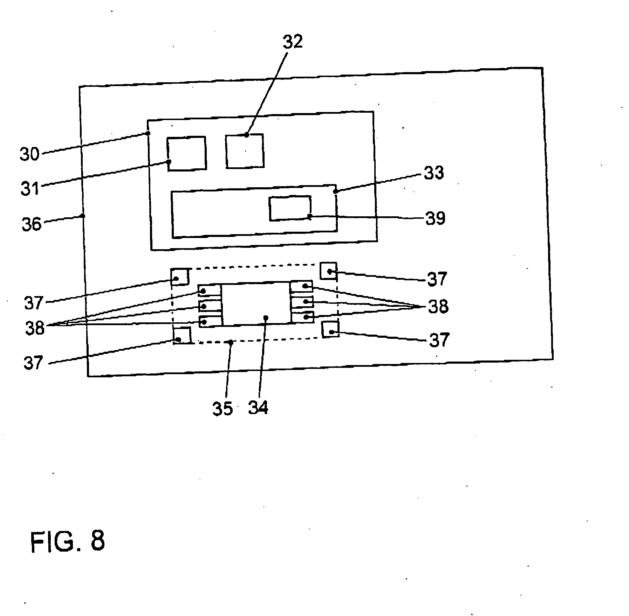

Im Folgenden wird eine Ausführungsform eines Navigationsgeräts beschrieben, das schematisch in Fig. 8 dargestellt ist und in dem ein Betriebsverfahren umgesetzt ist, das die oben erläuterten Bedienvorgänge unterstützt.

Ein Navigationsgerät 30 umfasst einen Kartenspeicher 31, eine Vorrichtung 32 zum Ermitteln der Position des Fahrzeugs, vorzugsweise einen Sattelitennavigationsempfänger, eine Steuereinheit 33, eine Anzeigevorrichtung 34 sowie eine Vorrichtung 35 zum Erfassen von Nutzereingaben. Das Navigationsgerät 30 ist in eine Multifunktionsbedienvorrichtung 36 integriert. Die Vorrichtung 35 zum Erfassen von Nutzereingaben umfasst eine oder mehrere Sensoreinheiten 37, die eine Position eines Körperteils, beispielsweise eines Fingers, eines Nutzers vor der Anzeigevorrichtung 34 ermitteln kann oder können. Vorzugsweise umfasst die Vorrichtung 35 mindestens vier an den Ecken der Anzeigevorrichtung angeordnete Sensoreinheiten 37, die über den Körper des Nutzers übertragene Hochfrequenzsignale erfassen können. Solche Sensoreinheiten 37 können so ausgestaltet werden, dass sie bereits eine Annäherung des Körperteils detektieren. Diese Sensoreinheiten 37 basieren auf Detektionssystemen, wie sie beispielhaft in der Druckschrift WO 2004/078536 beschrieben sind.

Alternativ können auf Kameras basierende, ultraschallbasierte oder auf optischen Sensoren basierende Sensoreinheiten verwendet werden.

Eine solche Sensoreinheit, die ein optisches Verfahren verwendet, kann beispielsweise gemäß folgendem Prinzip ausgestaltet sein. Eine Sende-LED strahlt ein rechteckförmig amplitudenmoduliertes Lichtsignal im optischen oder infraroten Wellenlängenbereich ab. Das an einem Objekt, beispielsweise dem Körperteil, reflektierte Lichtsignal wird von einer Photodiode erfasst. Von einer Kompensations-LED wird ein um 180° phasenversetztes ebenfalls rechteckförmig amplitudenmoduliertes Referenzlichtsignal zu der Photodiode über einen unveränderlichen Lichtweg gesandt. Die Kompensations-LED wird über einen Regelkreis mittels eines Regelsignals so ausgeregelt, dass sich das empfangene reflektierte Lichtsignal der Sende-LED und das empfangene Referenzlichtsignal der Kompensations-LED an der Photodiode aufheben und ein Gleichsignal detektiert wird. Eine Änderung des Regelsignals ist ein Maß für den Abstand des Objekts. Eine nach diesem Prinzip ausgestaltete Sensoreinheit ist weitgehend unabhängig von Temperatur- und Helligkeitsschwankungen.

Zusätzlich zu den Sensoreinheiten 37, die die Position eines Körperteils erfassen, kann das Navigationsgerät beliebige weitere Bedienelemente 38 umfassen.

Auf der Anzeigevorrichtung 34 wird im Betrieb in der Regel ein Kartenausschnitt dargestellt, dessen Mittelpunkt mit einer aktuellen Position des Fahrzeugs zusammentrifft. Um beispielsweise eine Zielposition zu erfassen, wird von der oder den Sensoreinheiten 37 eine Position eines Fingers des Nutzers erfasst. In Abhängigkeit von der Position wird, wie oben beschrieben, die Darstellung des Kartenausschnitts mittels der Steuereinheit 33, die eine häufig in Software ausgeführte Anpassungseinheit 39 umfasst, auf Basis der in dem Kartenspeicher 31 abgelegten Navigationsinformationen angepasst. Ist die Auflösung der Darstellung ausreichend um die Zielposition genau eingeben zu können, berührt der Nutzer die Anzeigevorrichtung 34, die als Touchscreen-Vorrichtung ausgebildet ist. Um eine Anpassung der Kartendarstellung hierbei unverändert zu lassen, spreizt der Nutzer zuvor beispielsweise seine Finger auseinander. Die Sensoreinheiten 37 erfassen eine größere flächige Ausdehnung des Körperteils, da ein minimaler Abstand zu den unterschiedlichen Sensoreinheiten 37 jeweils verringert ist. Hieraus erkennt die Steuereinheit 33 eine Bedienstoppgeste und lässt die Kartendarstellung beispielsweise für eine vorgegebene Zeitspanne unverändert. Ein Zeichnen eines Kreises mit einem Finger kann ebenfalls eine mögliche Bedienstoppgeste darstellen. Während die erste Geste statisch ist, ist die zweite vorgeschlagene Bedienstoppgeste dynamisch und hängt von der Ermittlung der Position des Körperteils zu aufeinander folgenden Zeitpunkten und gegebenenfalls zusätzlich von einer Geschwindigkeit ab, mit der die einzelnen Positionen auf dem Kreis von dem Körperteil durchlaufen werden. Die Steuereinheit 33 erfasst die Position auf der Anzeigevorrichtung 34 und errechnet die zugehörige Kartenposition. Diese wird als Zielposition für eine zielgeführte kartenbasierte Navigation verwendet, wie es im Stand der Technik bekannt ist.

Die Anzeigevorrichtung kann als Projektionsanzeige ausgebildet sein, bei der die dargestellten Informationen auf eine Fläche projiziert werden. In einem solchen Fall ist der Abstand bzw. die Bewegung des Körperteils usw. relativ zu dieser Fläche relevant.

## Patentansprüche

1. Navigationsgerät (30) in einem Fahrzeug zum Bieten einer Hilfe bei einer Orientierung und einem Auffinden einer gewünschten Fahrroute mit einer als Touchscreen ausgebildeten Anzeigevorrichtung (34) und mindestens einer Sensoreinheit (37) zum Ermitteln einer Position eines Körperteils, insbesondere eines Fingers eines Nutzers, zumindest relativ zu einer Anzeigefläche der Anzeigevorrichtung (34) bereits bei einer Annäherung an die Anzeigevorrichtung (34),
wobei eine Darstellung von Navigationsinformationen, insbesondere von Kartenausschnitten, in Abhängigkeit von der ermittelten Position des Körperteils angepasst auf der Anzeigefläche erfolgt,
wobei ein Volumen vor der Anzeigefläche in Teilvolumina unterteilt ist, und die mindestens eine Sensoreinheit (37) ausgestaltet ist, dass das Ermitteln der Position ein Ermitteln eines der Teilvolumina umfasst, in dem sich das Körperteil befindet und eine Anpassung der Darstellung der Navigationsinformationen in Abhängigkeit von dem ermittelten Teilvolumen erfolgt, in dem sich das Körperteil befindet,
**dadurch gekennzeichnet, dass**
eine Anpassung entsprechend der den jeweils ermittelten Teilvolumina zugeordneten Aktionen für eine vorgegebene Zeitspanne unterbleibt, nachdem mittels der mindestens einen Sensoreinheit (37) eine von dem Körperteil ausgeführt Bedienstoppgeste erfasst ist.

2. Navigationsgerät (30) nach Anspruch 1, **dadurch gekennzeichnet, dass** die mindestens eine Sensoreinheit ausgebildet ist, eine Zunahme einer flächigen Ausdehung des Körperteils als die Bedienstoppgeste zu erfassen.

3. Navigationsgerät (30) nach Anspruch 1 oder 2, **dadurch gekennzeichnet, dass** die mindestens eine Sensoreinheit ausgebildet ist, eine von dem Körperteil ausgeführte Bewegung als die Bedienstoppgeste zu erfassen.

4. Navigationsgerät (30) nach einem der vorangehenden Ansprüche, **dadurch gekennzeichnet, dass** die mindestens eine Sensoreinheit (37) ausgestaltet ist, dass das Ermitteln der Position das Ermitteln eines Abstands des Körperteils von der Anzeigefläche umfasst und die Darstellung der Navigationsinformationen hinsichtlich einer Ausschnittsvergrößerung der Navigationsinformationen, insbesondere einer Ausschnittsgröße des Kartenausschnitts, abhängig von dem ermittelten Abstand angepasst wird.

5. Navigationsgerät (30) nach Anspruch 4, **dadurch gekennzeichnet, dass** die Darstellug Navigationsinformationen hinsichtlich der Ausschnittsvergrößerung der Navigationsinformationen proportional von dem ermittelten Abstand des Körperteils von der Anzeigefläche abhängig ist.

6. Navigationsgerät (30) nach einem der vorangehenden Ansprüche, **dadurch gekennzeichnet, dass** die mindestens eine Sensoreinheit (37) ausgestaltet ist, dass das Ermitteln der Position das Ermitteln eines seitlichen Abstands des Körperteils von einer auf der Anzeigefläche stehenden Zentralachse umfasst und die Darstellung der Navigationsinformationen hinsichtlich einer Ausschnittsauswahl der Navigationsinformationen, insbesondere einer Ausschnittsbereichsauswahl des Kartenausschnitts, abhängig von dem ermittelten seitlichen Abstand angepasst wird.

7. Navigationsgerät (30) nach einem der vorangehenden Ansprüche, **dadurch gekennzeichnet, dass** eine Anpassung der Darstellung in Abhängigkeit von dem Abstand und/oder dem seitlichen Abstand kontinuierlich und/oder stufenweise erfolgt.

8. Navigationsgerät (30) nach einem der vorangehenden Ansprüche, **dadurch gekennzeichnet, dass** zumindest ein Teilvolumen ausgezeichnet ist, innerhalb dessen eine Bewegung des Körperteils möglich ist, ohne eine Anpassung der Darstellung der Navigationsinformationen zu bewirken.

9. Navigationsgerät (30) nach einem der vorangehenden Ansprüche, **dadurch gekennzeichnet, dass** die Teilvolumina einander teilweise überlappen.

10. Navigationsgerät (30) nach einem der vorangehenden Ansprüche, **dadurch gekennzeichnet, dass** die Sensoreinheit (37) ausgestaltet ist, mindestens eine weitere Position zeitlich vorausgehend zu ermitteln und die Anpassung der Darstellung in Abhängigkeit von der mindestens einen weiteren Position und der Position erfolgt.

11. Navigationsgerät (30) nach einem der vorangehenden Ansprüche, **gekennzeichnet durch** eine Geschwindigkeitsermittlungseinheit zum Ermitteln einer Geschwindigkeit des Körperteils, wobei eine Anpassung der Darstellung der Navigationsinformationen zusätzlich in Abhängigkeit der ermittelten Geschwindigkeit erfolgt.

12. Verfahren zum Betreiben eines Navigationsgeräts (30) in ein Fahrzeug, um einem Fahrer eine Hilfe bei einer Orientierung und einem Auffinden einer gewünschten Fahrroute zu bieten, umfassend ein Ermitteln einer Position eines Körperteils mittels mindestens einer Sensoreinheit (37), insbesondere eines Fingers eines Nutzers, zumindest relativ zu einer als Touchscreen ausgebildeten Anzeigefläche einer Anzeigevorrichtung (34) bereits bei einer Annäherung an die Anzeigefläche (34) und ein Anpassen einer Darstellung von Navigationsinformationen in Abhängigkeit von der ermittelten Position des Körperteils,
wobei ein Volumen vor der Anzeigefläche in Teilvolumina unterteilt ist und das Ermitteln der Position ein Ermitteln eines der Teilvolumina, in dem sich das Körperteil befindet, umfasst und eine Anpassung der Darstellung der Navigationsinformationen in Abhängigkeit von dem ermittelten Teilvolumen erfolgt, in dem sich das Körperteil befindet,
**dadurch gekennzeichnet, dass**
dass mittels der mindestens einen Sensoreinheit eine von dem Körperteil ausgeführte Bedienstoppgeste erkannt wird und eine Anpassung entsprechend der den jeweils ermittelten Teilvolumina zugeordneten Aktionen für eine vorgegebene Zeitspanne unterbleibt, nachdem die Bedienstoppgeste erkannt ist.

13. Verfahren nach Anspruch 12, **dadurch gekennzeichnet, dass** eine Zunahme einer flächigen Ausdehnung des Körperteils als die Bedienstoppgeste erkannt wird.

14. Verfahren nach Anspruch 12 oder 13, **dadurch gekennzeichnet, dass** eine von dem Körperteil ausgeführte Bewegung als die Bedienstoppgeste erfasst wird.

15. Verfahren nach einem der Ansprüche 12 bis 14, **dadurch gekennzeichnet, dass** das Ermitteln der Position das Ermitteln eines Abstands des Körperteils von der Anzeigefläche umfasst und die Darstellung der Navigationsinformationen hinsichtlich einer Ausschnittsvergrößerung der Navigationsinformationen, insbesondere einer Ausschnittsgröße des Kartenausschnitts, abhängig von dem ermittelten Abstand angepasst wird.

16. Verfahren nach Anspruch 15, **dadurch gekennzeichnet, dass** Navigationsinformationen hinsichtlich der Ausschnittsvergrößerung der Navigationsinformationen proportional zu dem ermittelten Abstand des Körperteils von der Anzeigefläche angepasst dargestellt werden.

17. Verfahren nach einem der Ansprüche 12 bis 16, **dadurch gekennzeichnet, dass** das Ermitteln der Position das Ermitteln eines seitlichen Abstands des Körperteils von einer auf der Anzeigefläche stehenden Zentralachse umfasst und die Darstellung der Navigationsinformationen hinsichtlich einer Ausschnittsauswahl der Navigationsinformationen, insbesondere einer Ausschnittsbereichsauswahl des Kartenausschnitts, abhängig von dem ermittelten seitlichen Abstand angepasst wird.

18. Verfahren nach einem der Ansprüche 12 bis 17, **dadurch gekennzeichnet, dass** eine Anpassung der Darstellung in Abhängigkeit von dem Abstand und/oder dem seitlichen Abstand kontinuierlich und/oder stufenweise erfolgt.

19. Verfahren nach einem der Ansprüche 12 bis 18, **dadurch gekennzeichnet, dass** zumindest ein Teilvolumen ausgezeichnet ist, innerhalb dessen eine Bewegung des Körperteils möglich ist, ohne eine Anpassung der Darstellung der Navigationsinformationen zu bewirken.

20. Verfahren nach einem der Ansprüche 12 bis 19, **dadurch gekennzeichnet, dass** mindestens eine weitere Position zeitlich vorausgehend zu der Position ermittelt wird und die Anpassung der Darstellung in Abhängigkeit von der mindestens einen weiteren Position und der Position erfolgt.

21. Verfahren nach einem der Ansprüche 12 bis 20, **dadurch gekennzeichnet, dass** die Teilvolumina einander teilweise überlappen und ein Wechsel der den Teilvolumina zugeordneten Anpassfunktionen hystereseartig vorgenommen wird, so dass die ermittelte Position des Körperteils als in einem der Teilvolumen befindlich betrachtet wird, wenn die ermittelte Position sich nicht zugleich noch in dem benachbarten Teilvolumen befindet, in dem sich das Körperteil zuvor befand.

22. Verfahren nach einem der Ansprüche 12 bis 21, **dadurch gekennzeichnet, dass** eine Geschwindigkeit des Körperteils ermittelt wird und eine Anpassung der Darstellung der Navigationsinformationen zusätzlich in Abhängigkeit der ermittelten Geschwindigkeit erfolgt.

23. Verfahren nach Anspruch 22, **dadurch gekennzeichnet, dass** eine Anpassung der Darstellung unterbleibt, wenn das Körperteil mit einer Geschwindigkeit oberhalb einer vorgegebenen Schwellengeschwindigkeit bewegt ist.

## Claims

1. Navigation device (30) in a vehicle for providing assistance with orientation and finding a desired route, having a display apparatus (34) in the form of a touchscreen and at least one sensor unit (37) for determining a position of a body part, in particular a finger of a user, at least relative to a display area of the display apparatus (34) as early as when approaching the display apparatus (34),
navigation information, in particular map sections, being presented on the display area in an adapted manner on the basis of the determined position of the body part,
a volume in front of the display area being divided into partial volumes, and the at least one sensor unit (37) being configured in such a manner that the determination of the position involves determining one of the partial volumes in which the body part is situated, and the presentation of the navigation information being adapted on the basis of the determined partial volume in which the body part is situated,
**characterized in that**
adaptation according to the actions assigned to the respectively determined partial volumes does not take place for a predefined period of time after an operation stop gesture carried out by the body part has been detected using the at least one sensor unit (37).

2. Navigation device (30) according to Claim 1, **characterized in that** the at least one sensor unit is designed to detect an increase in a two-dimensional extent of the body part as the operation stop gesture.

3. Navigation device (30) according to Claim 1 or 2, **characterized in that** the at least one sensor unit is designed to detect a movement carried out by the body part as the operation stop gesture.

4. Navigation device (30) according to one of the preceding claims, **characterized in that** the at least one sensor unit (37) is configured in such a manner that the determination of the position involves determining a distance between the body part and the display area, and the presentation of the navigation information with respect to a section enlargement of the navigation information, in particular a section size of the map section, is adapted on the basis of the determined distance.

5. Navigation device (30) according to Claim 4, **characterized in that** the presentation of the navigation information with respect to the section enlargement of the navigation information is proportionally dependent on the determined distance between the body part and the display area.

6. Navigation device (30) according to one of the preceding claims, **characterized in that** the at least one sensor unit (37) is configured in such a manner that the determination of the position involves determining a lateral distance between the body part and a central axis on the display area, and the presentation of the navigation information with respect to a section selection of the navigation information, in particular a section area selection of the map section, is adapted on the basis of the determined lateral distance.

7. Navigation device (30) according to one of the preceding claims, **characterized in that** the presentation is adapted continuously and/or in stages on the basis of the distance and/or the lateral distance.

8. Navigation device (30) according to one of the preceding claims, **characterized in that** at least one partial volume is distinguished, inside which a movement of the body part is possible without causing adaptation of the presentation of the navigation information.

9. Navigation device (30) according to one of the preceding claims, **characterized in that** the partial volumes partially overlap one another.

10. Navigation device (30) according to one of the preceding claims, **characterized in that** the sensor unit (37) is configured to determine at least one further position in advance in terms of time, and the presentation is adapted on the basis of the at least one further position and the position.

11. Navigation device (30) according to one of the preceding claims, **characterized by** a speed determination unit for determining a speed of the body part, the presentation of the navigation information additionally being adapted on the basis of the determined speed.

12. Method for operating a navigation device (30) in a vehicle in order to provide a driver with assistance with orientation and finding a desired route, involving determination of a position of a body part, in particular a finger of a user, at least relative to a display area of a display apparatus (34) in the form of a touchscreen using at least one sensor unit (37) as early as when approaching the display area (34) and adaptation of a presentation of navigation information on the basis of the determined position of the body part, a volume in front of the display area being divided into partial volumes and the determination of the position involving determining one of the partial volumes in which the body part is situated, and the presentation of the navigation information being adapted on the basis of the determined partial volume in which the body part is situated,
**characterized in that**
an operation stop gesture carried out by the body part is detected using the at least one sensor unit, and adaptation according to the actions assigned to the respectively determined partial volumes does not take place for a predefined period of time after the operation stop gesture has been detected.

13. Method according to Claim 12, **characterized in that** an increase in a two-dimensional extent of the body part is detected as the operation stop gesture.

14. Method according to Claim 12 or 13, **characterized in that** a movement carried out by the body part is detected as the operation stop gesture.

15. Method according to one of Claims 12 to 14, **characterized in that** the determination of the position involves determining a distance between the body part and the display area, and the presentation of the navigation information with respect to a section enlargement of the navigation information, in particular a section size of the map section, is adapted on the basis of the determined distance.

16. Method according to Claim 15, **characterized in that** navigation information with respect to the section enlargement of the navigation information is presented in an adapted manner in proportion to the determined distance between the body part and the display area.

17. Method according to one of Claims 12 to 16, **characterized in that** the determination of the position involves determining a lateral distance between the body part and a central axis on the display area, and the presentation of the navigation information with respect to a section selection of the navigation information, in particular a section area selection of the map section, is adapted on the basis of the determined lateral distance.

18. Method according to one of Claims 12 to 17, **characterized in that** the presentation is adapted continuously and/or in stages on the basis of the distance and/or the lateral distance.

19. Method according to one of Claims 12 to 18, **characterized in that** at least one partial volume is distinguished, inside which a movement of the body part is possible without causing adaptation of the presentation of the navigation information.

20. Method according to one of Claims 12 to 19, **characterized in that** at least one further position is determined prior to the position in terms of time, and the presentation is adapted on the basis of the at least one further position and the position.

21. Method according to one of Claims 12 to 20, **characterized in that** the partial volumes partially overlap one another, and the adaptation functions assigned to the partial volumes are changed in a hysteresis-like manner, with the result that the determined position of the body part is considered to be in one of the partial volumes if the determined position is not simultaneously still in the adjacent partial volume in which the body part was previously situated.

22. Method according to one of Claims 12 to 21, **characterized in that** a speed of the body part is determined, and the presentation of the navigation information is additionally adapted on the basis of the determined speed.

23. Method according to Claim 22, **characterized in that** the presentation is not adapted if the body part is moved at a speed above a predefined threshold speed.

## Revendications

1. Appareil de navigation (30) dans un véhicule destiné à offrir une aide lors d'une orientation et d'une recherche d'un trajet souhaité, comprenant un dispositif d'affichage (34) réalisé sous la forme d'un écran tactile et au moins une unité de détection (37) pour déterminer une position d'une partie du corps, notamment d'un doigt d'un utilisateur, au moins par rapport à une surface d'affichage du dispositif d'affichage (34) déjà lors d'une approche vers le dispositif d'affichage (34),
une représentation d'informations de navigation, notamment de portions de cartes, étant réalisée avec adaptation à la surface d'affichage en fonction de la position déterminée de la partie du corps,
un volume de la surface d'affichage étant divisé en volumes partiels et l'au moins une unité de détection (37) étant configurée de telle sorte que la détermination de la position comprend une détermination de l'un des volumes partiels dans lequel se trouve la partie du corps et une adaptation de la représentation des informations de navigation étant effectuée en fonction du volume partiel déterminé dans lequel se trouve la partie du corps,
**caractérisé en ce**
**qu'**une adaptation en fonction des actions associées aux volumes partiels respectivement déterminés est inhibée pendant un intervalle de temps prédéfini après la détection au moyen de l'au moins une unité de détection (37) d'un geste d'arrêt de commande accompli par la partie du corps.

2. Appareil de navigation (30) selon la revendication 1, **caractérisé en ce que** l'au moins une unité de détection est configurée pour détecter une augmentation d'une extension en surface de la partie du corps en tant que geste d'arrêt de commande.

3. Appareil de navigation (30) selon la revendication 1 ou 2, **caractérisé en ce que** l'au moins une unité de détection est configurée pour détecter un mouvement exécuté par la partie du corps en tant que geste d'arrêt de commande.

4. Appareil de navigation (30) selon l'une des revendications précédentes, **caractérisé en ce que** l'au moins une unité de détection (37) est conçue de telle sorte que la détermination de la position comprend la détermination d'une distance entre la partie du corps et la surface d'affichage et la représentation des informations de navigation est adaptée en fonction de la distance déterminée en vue d'un grossissement de la portion des informations de navigation, notamment d'une taille de la portion de carte.

5. Appareil de navigation (30) selon la revendication 4, **caractérisé en ce que** la représentation des informations de navigation en vue du grossissement de la portion des informations de navigation est proportionnelle à la distance déterminée entre la partie du corps et la surface d'affichage.

6. Appareil de navigation (30) selon l'une des revendications précédentes, **caractérisé en ce que** l'au moins une unité de détection (37) est conçue de telle sorte que la détermination de la position comprend la détermination d'une distance latérale entre la partie du corps et un axe central se trouvant sur la surface d'affichage et la représentation des informations de navigation est adaptée en fonction de la distance latérale déterminée en vue d'une sélection de la portion des informations de navigation, notamment d'une sélection d'une zone de la portion de carte.

7. Appareil de navigation (30) selon l'une des revendications précédentes, **caractérisé en ce qu'**une adaptation de la représentation en fonction de la distance et/ou de la distance latérale est effectuée en continu et/ou par paliers.

8. Appareil de navigation (30) selon l'une des revendications précédentes, **caractérisé en ce qu'**au moins un volume partiel est balisé, à l'intérieur duquel un mouvement de la partie du corps est possible sans provoquer une adaptation de la représentation des informations de navigation.

9. Appareil de navigation (30) selon l'une des revendications précédentes, **caractérisé en ce que** les volumes partiels se chevauchent partiellement les uns les autres.

10. Appareil de navigation (30) selon l'une des revendications précédentes, **caractérisé en ce que** l'unité de détection (37) est conçue pour déterminer par anticipation dans le temps au moins une position supplémentaire et l'adaptation de la représentation est effectuée en fonction de l'au moins une position supplémentaire et de la position.

11. Appareil de navigation (30) selon l'une des revendications précédentes, **caractérisé par** une unité de détermination de la vitesse destinée à déterminer une vitesse de la partie du corps, une adaptation de la représentation des informations de navigation étant en plus effectuée en fonction de la vitesse déterminée.

12. Procédé pour faire fonctionner un appareil de navigation (30) dans un véhicule afin d'offrir à un conducteur une aide lors d'une orientation et d'une recherche d'un trajet souhaité, comprenant une détermination d'une position d'une partie du corps au moyen d'au moins une unité de détection (37), notamment d'un doigt d'un utilisateur, au moins par rapport à une surface d'affichage d'un dispositif d'affichage (34), réalisée sous la forme d'un écran tactile, déjà lors d'une approche vers la surface d'affichage (34), et une adaptation d'une représentation d'informations de navigation en fonction de la position déterminée de la partie du corps,
un volume de la surface d'affichage étant divisé en volumes partiels et la détermination de la position comprenant une détermination de l'un des volumes partiels dans lequel se trouve la partie du corps et une adaptation de la représentation des informations de navigation étant effectuée en fonction du volume partiel déterminé dans lequel se trouve la partie du corps,
**caractérisé en ce**
**qu'**un geste d'arrêt de commande accompli par la partie du corps est détecté au moyen de l'au moins une unité de détection et une adaptation en fonction des actions associées aux volumes partiels respectivement déterminés est inhibée pendant un intervalle de temps prédéfini après la détection du geste d'arrêt de commande.

13. Procédé selon la revendication 12, **caractérisé en ce qu'**une augmentation d'une extension en surface de la partie du corps est détectée en tant que geste d'arrêt de commande.

14. Procédé selon la revendication 12 ou 13, **caractérisé en ce qu'**un mouvement exécuté par la partie du corps est détecté en tant que geste d'arrêt de commande.

15. Procédé selon l'une des revendications 12 à 14, **caractérisé en ce que** la détermination de la position comprend la détermination d'une distance entre la partie du corps et la surface d'affichage et la représentation des informations de navigation est adaptée en fonction de la distance déterminée en vue d'un grossissement de la portion des informations de navigation, notamment d'une taille de la portion de carte.

16. Procédé selon la revendication 15, **caractérisé en ce que** les informations de navigation sont représentées avec une adaptation proportionnelle à la distance déterminée entre la partie du corps et la surface d'affichage en vue du grossissement de la portion des informations de navigation.

17. Procédé selon l'une des revendications 12 à 16, **caractérisé en ce que** la détermination de la position comprend la détermination d'une distance latérale entre la partie du corps et un axe central se trouvant sur la surface d'affichage et la représentation des informations de navigation est adaptée en fonction de la distance latérale déterminée en vue d'une sélection de la portion des informations de navigation, notamment d'une sélection d'une zone de la portion de carte.

18. Procédé selon l'une des revendications 12 à 17, **caractérisé en ce qu'**une adaptation de la représentation en fonction de la distance et/ou de la distance latérale est effectuée en continu et/ou par paliers.

19. Procédé selon l'une des revendications 12 à 18, **caractérisé en ce qu'**au moins un volume partiel est balisé, à l'intérieur duquel un mouvement de la partie du corps est possible sans provoquer une adaptation de la représentation des informations de navigation.

20. Procédé selon l'une des revendications 12 à 19, **caractérisé en ce qu'**au moins une position supplémentaire est déterminée par anticipation dans le temps par rapport à la position et l'adaptation de la représentation est effectuée en fonction de l'au moins une position supplémentaire et de la position.

21. Procédé selon l'une des revendications 12 à 20, **caractérisé en ce que** les volumes partiels se chevauchent partiellement les uns les autres et un changement des fonctions d'adaptation associées aux volumes partiels est réalisé à la manière d'une hystérésis de sorte que la position déterminée de la partie du corps est considérée comme se trouvant dans l'un des volumes partiels lorsque la position déterminée ne se trouve pas en même temps encore dans le volume partiel voisin, dans lequel la partie du corps se trouvait précédemment.

22. Procédé selon l'une des revendications 12 à 21, **caractérisé en ce qu'**une vitesse de la partie du corps est déterminée, et une adaptation de la représentation des informations de navigation est en plus effectuée en fonction de la vitesse déterminée.

23. Procédé selon la revendication 22, **caractérisé en ce qu'**une adaptation de la représentation est inhibée lorsque la partie du corps se déplace à une vitesse supérieure à une vitesse de seuil prédéfinie.
